# EUROPEAN PATENT APPLICATION

(11) **EP 1 426 428 A1**
(43) Date of publication of application: **09.06.2004**
(21) Application number: 02027263.9
(22) Date of filing: 06.12.2002
(51) Int. Cl.: C09J 133/08, C08F 220/10

(54) **Aqueous polymer dispersions as pressure sensitive adhesives**

(71) Applicant: UCB S.A., 1070 Bruxelles (BE)
(72) Inventor: Van Es, Steven, 1180 Brussel (BE); Dupont, Olivier, 1450 Chastre (BE); Segers, Willy, 7050 Jurbise (BE)

(57) **Abstract**

The invention relates to aqueous polymer dispersions containing specific copolymers which are composed of at least four different ethylenically unsaturated monomers, to the production of said aqueous polymer dispersions and to the use of said aqueous polymer dispersions as adhesives.

## Description

The invention relates to aqueous polymer dispersions, to their use and to the preparation thereof.

Pressure sensitive adhesives (PSA) form a permanently adhesive film, which is capable of adhering to various surfaces upon slight pressure at ambient temperature. Pressure sensitive adhesives serve for the manufacture of self-adhesive products, such as labels, tapes or films. Such products are easy to handle and allow fast processing. In contrast to conventional adhesives, no curing nor solvent evaporation is required.

The quality of a substrate applied with a self-adhesive film is usually dependent on the adjustment of the internal strength within the material (cohesion) and the external affinity to the substrate (adhesion). Particularly for pressure sensitive adhesives which are devoted for the production of self-adhesive films, tapes or labels, a high degree of cohesion, i.e. shear strength, is required, as under the conditions of further processing of these products (cutting, stamping, etc.) the adhesive film should firmly remain on the substrate. At the same time, the adhesion, i.e. the peel strength and loop tack of the product should meet the requirements for the intended application. Simultaneously, adhesion and cohesion of a pressure sensitive adhesive are difficult to adjust.

Besides good adhesion and good cohesion there are further properties of pressure sensitive adhesives which may be desired. It is known e.g. that many pressure sensitive adhesives with transparent facestock or substrate when subjected to water or high humidity show an effect, which is called "water whitening" or "blush". As this effect impairs the properties, i.e. the appearance of the subject to which the pressure sensitive adhesive is applied, water whitening is to be avoided for many applications. US 6,359,092 discloses an aqueous, blush-retardant pressure sensitive adhesive which comprises an aqueous latex emulsion emulsified in the presence of the aromatic emulsifier poly(oxy-1,2-ethanediyl), α-sulfo-α-[4-nonyl-2-(1-propenyl)-pheny-oxyl]-branched ammonium salt (Hitenol BC-10).

It is an object of the invention to provide advantageous aqueous polymer dispersions, which are suitable as adhesives.

It has been surprisingly found that this underlying technical problem is solved by the subject matter of the patent claims.

The invention is based on the unexpected finding that certain aqueous polymer dispersions are advantageous adhesives, which do not show the water-whitening effect. The polymer dispersions contain polymers, which are abbreviated as P in the present application. It was also found that polymers falling within the above definitions, which have a specific structure, which is caused by a specific production process, are particularly suitable for carrying out the invention.

In a preferred embodiment of the invention the aqueous polymer dispersion comprises polymer P which is composed of constituents a, b, c and d, optionally together with constituents e and/or f, wherein constituent a ≠ constituent b ≠ constituent c ≠ constituent d ≠ constituent e ≠ constituent f

The polymer P contained in these aqueous polymer dispersions is composed of
- from 5 to 92.5 wt.-% of at least one alkyl acrylate the homopolymers of which have a glass transition temperature of -40°C or below (constituent a);
- from 2.5 to 30 wt.-% of at least one alkyl (meth)acrylate the homopolymers of which have a glass transition temperature of from -25°C to 0°C (constituent b);
- from 2.5 to 30 wt.-% of at least one alkyl (meth)acrylate the homopolymers of which have a glass transition temperature of between 0°C and 20°C (constituent c);
- from 2.5 to 30 wt.-% of at least one ethylenically unsaturated monomer the homopolymers of which have a glass transition temperature of 20°C or above and which do not contain a functional group selected from hydroxyl, acid, acid anhydride, nitro, epoxy and amino groups (constituent d), whereby the monomer is preferably selected from the group consisting of:
   (i) alkyl (meth)acrylates,
   (ii) vinylaromatic compounds,
   (iii) vinylhalides,
   (iv) vinylnitriles and
   (v) vinylesters of carboxylic acids;
- from 0 to 10 wt.-% of at least one ethylenically unsaturated monomer having at least one acid group or acid anhydride group (constituent e); and
- from 0 to 60 wt.-% of at least one ethylenically unsaturated monomer having either no further functional group or in addition to the ethylenically unsaturated group at least one functional group other than an acid group or an acid anhydride group (constituent f).

All values in wt.-% are based on the total weight of the polymer.

From the above definition it follows that polymer P always contains constituents a, b, c and d. As the content of constituent e and f may be 0 wt.-%, the presence of constituent e and constituent f is only optional.

In this specification the term "(meth)acryl..." means "acryl..." as well as "methacryl...". Compounds which are usually not interpreted as polymerizable monomers, such as initiators or chain transfer agents, are not to be understood as constituents of polymers P according to the invention. Thus, a polymer which is composed of constituents a, b, c, d, e and f may also contain e.g. fragments of radical initiators or chain transfer agents covalently bonded to the polymer.

### Constituent a:

Examples of alkyl acrylates which are covered by the definition of constituent a are: C₁-C₂₀ alkyl acrylates the homopolymers of which have a glass transition temperature of -40°C or below (T_{g}≤-40°C), preferably C₁-C₁₀ alkyl acrylates the homopolymers of which have a glass transition temperature of -40°C or below, in particular n-butyl acrylate, 2-ethylbutyl acrylate, hexyl acrylate, 2-ethylhexyl acrylate, nonyl acrylate and n-octyl acrylate. N-butyl acrylate and 2-ethylhexyl acrylate are preferred, 2-ethylhexyl acrylate is particularly preferred. In case that the polymer P contains 2-ethylhexyl acrylate it is preferred that the polymer does not contain any n-butyl acrylate or that the polymer P only contains minor amounts of n-butyl acrylate, preferably less than 5 wt.-%, more preferably less than 2 wt.-%, in particular less than 1 wt.-%.

Preferably the polymer P is composed of 40 to 90 wt.-%, more preferably 55 to 80 wt.-%, in particular 64 to 70 wt.-% of constituent a.

### Constituent b:

Examples of alkyl (meth)acrylates which are covered by the definition of constituent b are: C₁-C₂₀ alkyl (meth)acrylates the homopolymers of which have a glass transition temperature of from -25°C to 0°C (-25°C≤T_{g}≤0°C), preferably C₁-C₁₂ alkyl (meth)acrylates the homopolymers of which have a glass transition temperature of from -25°C to 0°C. Alkyl acrylates are preferred over the corresponding alkyl methacrylates. Ethyl acrylate, sec-butyl acrylate, isobutyl acrylate and isopropyl acrylate are preferred, particularly ethyl acrylate.

Preferably, the homopolymers of the alkyl (meth)acrylates which are covered by the definition of constituent b have a glass transition temperature of between -25°C and - 5°C (-25 °C<T_{g}<-5°C).

Preferably the polymer P is composed of 5 to 30 wt.-%, more preferably 8 to 20 wt.-%, in particular 10 to 15 wt.-% of constituent b.

### Constituent c:

Examples of alkyl (meth)acrylates which are covered by the definition of constituent c are:
C₁-C₂₀ alkyl (meth)acrylates the homopolymers of which have a glass transition temperature of between 0°C and 20°C (0°C<T_{g}<20°C), preferably C₁-C₁₂ alkyl (meth)acrylates the homopolymers of which have a glass transition temperature of between 0°C and 20°C. Methyl acrylate and n-butyl methacrylate are preferred, particularly methyl acrylate.

Preferably the homopolymers of the alkyl (meth)acrylates which are covered by the definition of constituent c have a glass transition temperature of between 5°C and 20°C (5°C<T_{g}< 20°C).

Preferably the polymer P is composed of 5 to 30 wt.-%, more preferably 8 to 20 wt.-%, in particular 10 to 15 wt.-% of constituent c.

Preferably the total amount of constituent b and constituent c in polymer P is 5 to 30 wt.-%, more preferably 15 to 30 wt.-%, in particular 22 to 26 wt.-%. In a preferred embodiment the polymer is composed of equal amounts of constituent b and constituent c.

### Constituent d:

Examples of preferred monomers, which are covered by the definition of constituent d, are:
- alkyl (meth)acrylates: C₁-C₂₀ alkyl (meth)acrylates the homopolymers of which have a glass transition temperature of 20°C or above (T_{g}≥20°C), preferably C₁-C₁₀ alkyl (meth)acrylates the homopolymers of which have a glass transition temperature of 20°C or above, in particular methyl methacrylate and tert-butyl acrylate. Methyl methacrylate is preferred.
- vinylaromatic compounds: C₈-C₂₀ vinylaromatic compounds the homopolymers of which have a glass transition temperature of 20°C or above (T_{g}≥20°C), preferably C₈-C₂₀ styrene derivatives the homopolymers of which have a glass transition temperature of 20°C or above, in particular metylstyrene, para-methylstyrene, 4-tert-butylstyrene, 4-sec-butylstyrene and styrene, styrene being preferred.
- vinylhalides: ethylenically unsaturated compounds substituted with chlorine, fluorine or bromine the homopolymers of which have a glass transition temperature of 20°C or above (T_{g}≥20°C), preferably C₂-C₅ vinylhalides the homopolymers of which have a glass transition temperature of 20°C or above, in particular vinyl chloride.
- vinylnitriles: C₂-C₅ vinylnitriles the homopolymers of which have a glass transition temperature of 20°C or above (T_{g}≥20°C), in particular methacrylonitrile and acrylonitrile.
- vinylesters of carboxylic acids: vinylesters of C₁-C₂₀ carboxylic acids the homopolymers of which have a glass transition temperature of 20°C or above (T_{g}≥20°C), preferably vinyl acetate and vinyl formate.

Preferably the homopolymers of the alkyl (meth)acrylates which are covered by the definition of constituent d have a glass transition temperature of above 25°C (T_{g}>25°C).

Preferably the polymer P is composed of 1 to 30 wt.-%, more preferably 1.5 to 15 wt.-%, in particular 2 to 4 wt.-% of constituent d.

### Constituent e:

Examples of ethylenically unsaturated compounds which are covered by the definition of constituent d are: ethylenically unsaturated compounds having carboxyl groups, such as (meth)acrylic acid, maleic acid, ethylenically unsaturated acid anhydrides or monoesters of ethylenically unsaturated diacids or triacids, such as maleic acid anhydride, maleic acid monoester or fumaric acid monoester. Acrylic acid and methacrylic acid are preferred, particularly a mixture thereof.

Preferably the polymer P is composed of 0.5 to 6 wt.-%, more preferably 0.5 to 5 wt.-%, in particular 3.5 to 5 wt.-% of constituent e.

### Constituent f:

Examples of further ethylenically unsaturated compounds, which are covered by the definition of constituent f are: compounds which customarily enhance the internal strength and/or adhesion of the films formed from an aqueous polymer dispersion containing the polymers of the invention. In addition to the ethylenically unsaturated group these compounds either contain no further functional group or these compounds contain one or more further functional group other than an acid group or an acid anhydride group. Compounds of this type (constituent f) preferably have epoxy, hydroxyl, ethyl imidazolidone, N-methylol, carbonyl or a further ethylenically unsaturated group which is not conjugated with the other ethylenically unsaturated group. The definition of constituent f encompasses ethylenically unsaturated compounds having an acid group or an acid anhydride group if additionally one or more further functional groups other than an acid group or an acid anhydride group are present in the molecules.

Compounds, which are covered by the definition of constituent f, are only those compounds, which are not covered by the definition of constituents a, b, c, d and e.

Ethylenically unsaturated compounds which are covered by the definition of constituent f□may contain functional groups such as -OR, -OOR, -SR, -SSR, -COR, - COHal, -CO₂R, -OCO₂R, -OCONRR', -NRCO₂R', -CONRR', -NRCONR'R", -NRR', - NRNR'R", -NO₂, -NO, -SOR, -SO₂R, -CR=CR'R", -C≡CR, -Hal, -N₃, -N=NR, -C=NR, -CN, - NC, -NCO, -OCN, -NCS, -SCN, -Si(OR)₃, -CNRNR'R", -NRCNR'NR"R"', -PO(OR)₂, - OPO(OR)₂, -SO₃R, -OSO₃R, -aryl, -heteroaryl.

Aryl means any aromatic hydrocarbon having 6 to 24 carbon ring atoms which may be monocyclic or annealed, e.g. phenyl, naphthyl, azulene, anthracene and phenanthrene.

Heteroaryl means any aromatic hydrocarbon having 5 to 24 ring atoms which may be monocyclic or annealed, of which at least one ring atom is a heteroatom selected from the group consisting of N, O, S, and P, e.g. pyrrole, indole, imidazole, benzimidazole, pyrazin, pyridazin, triazole, tetrazole, oxazole, isoxazole, thiophene, thiazole, isothiazole, pyridine, chinoline, isochinoline, pyrimidine, etc..

In the above exemplified functional groups R, R', R" and R"' may independently be hydrogen or C₁-C₂₄ alkyl (linear, branched or cyclic), Hal means F, Cl, Br or I. The functional groups also include cyclic analogues: for example, -OR includes oxiranes, - SR includes thiiranes, -CONRR' includes lactames and -CO₂R includes lactones. The functional groups may also be combined. For example, the combination of a carbonyl group and a heteroaryl group, such as imidazole, leads to an imidazolone.

Preferably, ethylenically unsaturated compounds which are covered by the definition of constituent f contain in addition to the ethylenically unsaturated group either no further functional group or one or more of the above mentioned functional groups. Preferably, the compound contains an epoxy group, ethyl imidazolidone group, hydroxyl group, N-methylol group, carbonyl group or a further ethylenically unsaturated group which is not conjugated with the other ethylenically unsaturated group. Ethylenically unsaturated acids or acid anhydrides are also encompasses by the definition of constituent f if at least one further functional group is present. In a particularly preferred embodiment constituent f comprises ethyl imidazolidone methacrylate.

Preferably the polymer P is composed of less than 25 wt.-%, more preferably less than 20 wt.-%, even more preferably 0.1 to 10 wt.-%, in particular 1.5 to 2.5 wt.-% of constituent f.

In one embodiment of the invention the polymer P comprises 60 to 80 wt.-% of constituent a, 10 to 20 wt.-% of constituent b, 10 to 20 wt.-% of constituent c and 1 to 5 wt.-% of constituent d.

In a preferred embodiment of the invention the polymer P comprises 60 to 70 wt.-% of constituent a, 10 to 15 wt.-% of constituent b, 10 to 15 wt.-% of constituent c, 2 to 4 wt.-% of constituent d, 3.5 to 5 wt.-% of constituent e and 1.5 to 2.5 wt.-% of constituent f.

In one embodiment more than 85 wt.-% of the polymer P is composed of 2-ethylhexyl acrylate, ethyl acrylate and methyl acrylate.

In a preferred embodiment the polymer P comprises 2-ethylhexyl acrylate, ethyl acrylate, methyl acrylate and styrene, and optionally (meth)acrylic acid and/or ethyl imidazolidone methacrylate. In another embodiment the polymer P additionally comprises n-butyl acrylate and/or methyl methacrylate.

In a particularly preferred embodiment the polymer P is composed of 60 to 70 wt.-% of 2-ethylhexyl acrylate, 10 to 15 wt.-% of ethyl acrylate, 10 to 15 wt.-% of methyl acrylate, 1 to 5 wt.-% of styrene, 0.5 to 2 wt.-% of acrylic acid, 0.5 to 2 wt.-% of methacrylic acid and 1 to 5 wt.-% of ethyl imidazolidone methacrylate, 0.01 to 1 wt.-% of n-butyl acrylate and/or 0.1 to 1 wt.-% methyl methacrylate.

The glass transition temperature (T_{g}) of a homopolymer can be determined by conventional methods and if nothing else is mentioned in the present application all glass transition temperatures are measured by differential thermal analysis (DTA) or differential scanning calorimetry (DSC) (see ASTM 3418/82, midpoint temperature).

For the homopolymers of numerous monomers the glass transition temperatures T_{g} are known in the prior art. It is referred to "Polymer Handbook, 2d Ed. By J. Brandrup & E.H. Immergut, 1975, J. Wiley & Sons". If a certain monomer is not already explicitly classified as one of the constituents in this specification the T_{g} values disclosed in the above referenced handbook should serve as the decisive basis whether a certain monomer falls under the definition of any of the constituents. Only if a T_{g} value of a distinct homopolymer is disclosed neither in this specification nor in the above referenced handbook, the T_{g} value obtained according to DTA or DSC measurements becomes decisive.

The invention also relates to the preparation of aqueous polymer dispersions containing polymer P.

The polymer P of the invention is preferably obtained by emulsion polymerization. The emulsion polymerization is preferably carried out at a temperature of from 30 to 100°C, more preferably of from 50 to 95°C. The polymerization medium may be composed exclusively of water, but also mixtures of solvents which are at least partially soluble in water may be used, e.g. a mixture of methanol and water or a mixture of isopropanol and water. The emulsion polymerization may be carried out in a batch process or alternatively in a semi-continuous process, wherein the reactants and auxiliary additives are added continuously to a reactor in which the polymerization takes place. The reactants may be added as a gradient or stepwise.

In a preferred embodiment of the process according to the invention the polymerization is carried out in a semi-continuous process, wherein initially a relatively small portion of the monomers to be polymerized is fed into the reactor, heated and prepolymerized. Then, the remainder of the monomers is continuously fed into the reactor, usually via several inlets which are spatially separated from one another. The monomers may be fed into the reactor in pure or in emulsified form (pre-emulsions), as single monomers per inlet or as mixtures of monomers. The mass flow through each inlet may be adjusted individually, i.e. stepwise or as a gradient. The monomers may also be fed into the reactor, thereby establishing a superimposed concentration gradient within the reaction zone of the reactor.

Preferably the polymer P is prepared by emulsion polymerization in water in the presence of suitable surfactants. Preferably the final aqueous polymer dispersion obtained from the polymerization process contains 1 to 5 wt.-% of surfactants (based on the total weight of the monomers to be polymerized). Suitable surface active substances include not only the protective colloids customarily used for carrying out free radical aqueous emulsion polymerizations but also emulsifiers.

Examples of suitable protective colloids are polyvinyl alcohols, cellulose derivatives and vinylpyrrolidone-containing polymers. A detailed description of further suitable protective colloids may be found in Houben-Weyl, Methoden der organischen Chemie, Volume XIV/1, Makromolekulare Stoffe, Georg Thieme Verlag, Stuttgart, 1961, pages 411 to 420.

It is also possible to use mixtures of emulsifiers and/or protective colloids. Preferably, the surface active substances used are exclusively emulsifiers whose relative molecular weights are customarily below 1000, in contrast to protective colloids. They can be anionic, cationic or nonionic in nature. If mixtures of surface active substances are used, the individual components must be compatible with one another, which can be verified in advance of the polymerization by means of a few preliminary experiments if there is any doubt. In general, anionic emulsifiers are compatible with one another and with nonionic emulsifiers. The same is true of cationic emulsifiers, while anionic and cationic emulsifiers are usually incompatible with one another.

According to the invention the emulsifiers are divided into two groups: emulsifiers containing aromatic groups (aromatic emulsifiers) and emulsifiers not containing any aromatic groups (aliphatic emulsifiers). In this specification the simple term "emulsifier" encompasses both, aromatic emulsifiers and aliphatic emulsifiers.

Examples of customary aliphatic emulsifiers are ethoxylated fatty alcohols (EO degree: 3-50, alkyl radical: C₈-C₃₆), and also alkali metal and ammonium salts of alkyl sulfates (alkyl radical: C₈-C₁₂), alkali metal and ammonium salts of sulfuric monoesters of ethoxylated alkanols (EO degree: 4-30, alkyl radical: C₁₂-C₁₈), alkali metal and ammonium salts of alkylsulfonic acids (alkyl radical: C₁₂-C₁₈). Disponil FES 32 IS and Disponil FES 993 IS are particularly preferred. Disponil FES 32 IS (from Cognis) is an alkali metal (Na) of sulfuric monoesters of ethoxylated alkanols (EO degree: 4, alkyl radical: C₁₂-C₁₈). Disponil FES 993 IS (from Cognis) is an alkali metal (Na) of sulfuric monoesters of ethoxylated alkanols (EO degree: 12, alkyl radical: C₁₂-C₁₈).

Examples of customary aromatic emulsifiers are ethoxylated mono-, di- and trialkylphenols (EO degree: 3-50, alkyl radical: C₄-C₉), ethoxylated alkylphenols (EO degree: 3-50, alkyl radical: C₄-C₉), alkali metal and ammonium salts of alkylarylsulfonic acids (alkyl radical: C₉-C₁₈) and sulfonated alkylarylethers.

Further aromatic and aliphatic emulsifiers may be found in Houben-Weyl, Methoden der organischen Chemie, Volume XIV/1, Makromolekulare Stoffe, Georg Thieme Verlag, Stuttgart, 1961, pages 192 to 208.

Preferably the aqueous polymer dispersions according to the invention are the product dispersions which are directly obtained from the emulsion polymerization. These aqueous polymer dispersions may be used as such for different purposes, e.g. as pressure sensitive adhesives.

Chain transfer reagents can also be used in the course of the polymerization, for example in amounts of from 0.01 to 0.8 parts per weight per 100 parts per weight of the monomers to be polymerized. The function of the chain transfer reagents is to reduce the molar mass of the polymers obtained. Suitable examples are compounds having a thiol group, such as tert-butyl mercaptane, ethylhexyl thioglycolate, mercaptoethanol, mercaptopropyl-trimethoxysilane, n-dodecyl mercaptane or tert-dodecyl mercaptane. According to the invention, the portion of said chain transfer agents can range from 0.01 to 0.8 wt.-%, preferably from 0.05 to 0.5 wt.-% per 100 parts per weight of the monomers to be polymerized. In case that the final polymer P is devoted for the use as an adhesive for high-gloss film lamination, the use of chain transfer agents is less preferred.

Suitable free radical polymerization initiators are all those which are capable of initiating a free radical aqueous emulsion polymerization. Preference is given to peroxides, with particular preference to alkali metal peroxydisulfates, in particular to ammonium peroxydisulfate. Other suitable initiators are for example redox-initiator systems, such as ascorbic acid/Fe(II)sulfate/sodium peroxydisulfate, tert-butylhydroperoxide/sodium disulfite or tert-butylhydroperoxide/sodium hydroxymethanesulfinic acid. The amount of initiator may generally range from 0.1 to 10 wt.-%, preferably from 0.2 to 5 wt.-% (based on the total weight of the monomers to be polymerized). It is also possible to use a mixture of different initiators.

The suitable mode of supplying the reaction medium with initiator is known to the skilled person. Before the polymerization starts the initiator may be present in the reactor either in the total amount or only in part. In the latter case, the remainder of the initiator is fed into the reactor via an inlet at a rate dependent on the consumption of the initiator due to the polymerization reaction. In order to avoid that any monomers are still present in the reaction medium after the polymerization has come to an end, generally further initiator is added when the yield of the reaction is in the range of 95% or above.

Monomers, initiators, chain transfer agents, etc. may be fed into the reactor from the top, at the side or through the bottom of the reactor.

Preferably the polymerization starts with a polymerized seed or with a prepolymer. The chemical nature of the polymerized seed or the prepolymer is not limited, as long as the polymers P which are finally obtained from the polymerization process, are covered by the definition of polymers P. Not all of the constituents have to be present simultaneously in the polymerized seed or in the prepolymer. Preferably the composition of the constituents of the polymerized seed and the composition of the constituents which are polymerized on the polymerized seed differ in at least one constituent. Preferably the polymerized seed comprises n-butyl acrylate which is not present among the constituents to be polymerized on the polymerized seed. Preferably the aqueous dispersion contains as a polymerized seed or a prepolymer a polymer having a non-zero weight average diameter of from 10 to 100 nm, preferably of from 40 to 60 nm.

The emulsion polymerization usually yields aqueous polymer dispersions having a solids content of from 15 to 75 wt.-%, preferably of from 40 to 75 wt.-%. Polymer dispersions having a high solids content are preferred.

Preferably, the polymers P obtained according to the invention have an average particle size of 200 to 250 nm. The pH of the aqueous dispersions is preferably in the range of 4 to 9.

In one embodiment of the invention the polymer is prepared using a first, a second and a third pre-mix tank and a reactor. In a first step of the process the first and the second pre-mix tank are fed with water and emulsifier, optionally with further additives such as sodium carbonate and isopropanol. The mixture is aged for a certain time, preferably for 15 minutes. Then, the monomers which are to be polymerized are added to the solutions contained in the first and the second pre-mix tank. It is possible that both pre-mix tanks are fed with the same monomers in identical amounts. Alternatively, it is also possible to add different amounts of different monomers to the pre-mix tanks. A chain transfer agent such as n-dodecyl mercaptan is preferably added to the pre-emulsion of the first or the second pre-mix tank. It is also possible, that the same chain transfer agent or a different chain transfer agent is added to the pre-emulsion in the other pre-mix tank. The third pre-mix tank is fed with water and initiator and the reactor is fed with water, then is heated to the desired reaction temperature and fed with initiator and seed. The polymerization is then performed by continuously supplying the reactor with the pre-emulsions from the first and the second pre-mix tank and with the solution of the initiator from the third pre-mix tank. Both pre-emulsions can be fed simultaneously directly in the reactor or one after each other, or the second pre-emulsion fed to the first pre-emulsion and simultaneously to the reactor. Preferably the pre-emulsions are added during a period of some hours, preferably during 2 to 8 hours. When the total initial content of the three pre-mix tanks has been transferred into the reactor the mixture is aged and cooled. Additional amount of initiator can be added to reduce the level of free monomers. Further additives such as biocides can then be added.

In another embodiment of the invention the preparation of the polymers starts from a single mixture containing all monomers to be incorporated into the polymer chain. A fraction of this mixture is fed into the reactor and the polymerization is initiated. If desired, polymerized seed material may be present as well. After initiation of the polymerization the remainder of the monomer mixture is added to the reaction solution stepwise or as a gradient. Simultaneously, a variable amount of the chain transfer agent is added to the reactor, optionally as a gradient. Alternatively, the total amount of the mixture containing all monomers is fed to the reactor before the polymerization is initiated. Then, the chain transfer agent is added to the reactor in various amounts during the polymerization, preferably as a gradient. The continuous addition of chain transfer agent during the polymerization allows to control the distribution of the molecular mass of the polymers.

By varying the concentration of the chain transfer agent in the feeds to the reactor, it is possible to broaden the distribution of molecular masses and to control the particle morphology. This principle is known in the prior art, e.g. it can be referred to US 4,039,500.

The polymers P, particularly the aqueous polymer dispersions thereof may be used as adhesives, preferably as pressure sensitive adhesives. Preferably the polymers P are used in form of their aqueous dispersions, which may be used without addition of any further additives. However, it is also possible that further additives, such as tackifiers, defoaming agents, thickening agents, coagulants, softeners, pigments, surfactants, biocides or fillers are added.

Examples of suitable tackifiers are resins such as kolophonium resins (e.g. abientinic acid) and their derivatives, such as esters thereof. Kolophonium esters may be obtained from alcohols such as methanol, ethandiol, diethylenglycol, triethylenglycol, 1,2,3-propanetriol, pentaerythrit, etc. Other suitable tackifiers are cumaron-inden resins, polyterpene resins, hydrocarbon resins based on unsaturated hydrocarbons, such as butadiene, pentene, methylbutene, isoprene, piperylene, divinylmethane, pentadiene, cyclopentene, cyclopentadiene, cyclohexadiene, styrene and styrene derivatives. Further suitable tackifiers are polyacrylates having a relatively low molecular weight (mean average weight generally below 30000). These polyacrylates generally are composed of C₁-C₈ alkyl(meth)acrylates.

The invention is further illustrated by the following examples:

Two polymers, the composition of which is shown in Tables 2a and 3a here below, were prepared according to the invention:

**Table 2a:**

| | composition 1 | *[g]* | *[wt.-%]* |
|---|---|---|---|
| a | 2-ethylhexyl acrylate | 797.98 | 65.27 |
| a | n-butyl acrylate | 9.73 | 0.80 |
| | n-dodecyl mercaptan | 1.20 | 0.10 |
| b | ethyl acrylate | 148.88 | 12.18 |
| c | methyl acrylate | 148.88 | 12.18 |
| d | methyl methacrylate | 4.50 | 0.37 |
| d | styrene | 33.55 | 2.74 |
| e | methacrylic acid | 35.74 | 2.92 |
| e | acrylic acid | 12.28 | 1.00 |
| f | ethylimidazolidone methacrylate | 29.78 | 2.44 |
| | Σ | 1222.52 | 100.00 |

**Table 3a:**

| | composition 2 | *[g]* | *[wt.-%]* |
|---|---|---|---|
| a | 2-ethylhexyl acrylate | 797.98 | 65.63 |
| a | n-butyl acrylate | 9.73 | 0.80 |
| | n-dodecyl mercaptan | 0.60 | 0.05 |
| b | ethyl acrylate | 148.88 | 12.24 |
| c | methyl acrylate | 148.88 | 12.24 |
| d | methyl methacrylate | 4.50 | 0.37 |
| d | styrene | 33.55 | 2.76 |
| e | methacrylic acid | 35.74 | 2.94 |
| e | acrylic acid | 12.28 | 1.01 |
| f | ethylimidazolidone methacrylate | 23.82 | 1.96 |
| | Σ | 1215.96 | 100.00 |

The polymers were polymerized in a reactor at a polymerization temperature of 80°C in a manner known *per se*. During the course of the polymerization two pre-emulsions (pre-emulsion 1 and pre-emulsion 2) were fed into the reactor. Pre-emulsion 2 is introduced in pre-emulsion 1 (in pre-mix tank 1) while pre-mix tank 1 content is fed into the reactor. In parallel, the initiator solution (in pre-mix tank 3) is fed into the reactor. The initial composition of the pre-emulsions and the initial reactor content are shown in the Tables 2b and 3b:

**Table 2b:**

| Composition 1 | | | | |
|---|---|---|---|---|
| Steps | Raw Materials | Dilution | Weight [g] | |
| | | | Bottom tank | Pre-emulsion |
| Reactor | H₂O | | 484.68 | |
| | *polymerized seed* | 37% | 24.32 | |
| Initiator | (NH₄)₂S₂O₈ | | 1.20 | |
| | H₂O | | 14.40 | |
| Pre-mix tank 3 | (NH₄)₂S₂O₈ | | 2.40 | |
| | H₂O | | 25.60 | |
| Pre-emulsion 1 In pre-mix tank 1 | H₂O | | | 191.13 |
| | Na₂CO₃ 2H₂O | | | 1.20 |
| | Disponil FES 993IS | 29% | | 41.38 |
| | Isopropanol | | | 4.50 |
| | 2-ethylhexyl acrylate | | | 10.72 |
| | n-dodecyl mercaptan | | | 1.20 |
| | 2-ethylhexyl acrylate | | | 388.27 |
| | ethyl acrylate | | | 74.44 |
| | methyl acrylate | | | 74.44 |
| | Styrene | | | 11.91 |
| | methacrylic acid | | | 17.87 |
| | acrylic acid | | | 5.96 |
| | ethyl imidazolidone methacrylate | | | 14.89 |
| Pre-emulsion 2 In pre-mix tank 2 | H₂O | | | 191.13 |
| | Na₂CO₃ 2H₂O | | | 1.20 |
| | Disponil FES 993IS | 29% | | 41.38 |
| | Isopropanol | | | 4.50 |
| | 2-ethylhexyl acrylate | | | 398.99 |
| | ethyl acrylate | | | 74.44 |
| | methyl acrylate | | | 74.44 |
| | Styrene | | | 11.91 |
| | methacrylic acid | | | 17.87 |
| | acrylic acid | | | 5.96 |
| | ethyl imidazolidone methacrylate | | | 14.89 |
| Realimentation | Fe(NO₃)₃ | 10% | 0.05 | |
| | Luperox H70 | 10% | 6.00 | |
| | Rongalit C | 5% | 12.00 | |
| Formulation | Biocide K10 | 1% | 4.50 | |
| Luperox H70 is tert.-butylhydroperoxyde 70% with 30% water; | | | | |
| Rongalit C is sodium hydroxymethanesulphinate | | | | |
| Biocide K10 is a biocide from Thor. It is an aqueous mixture of 5-chloro-2-methyl-4-isothiazolin-3-one and 2-methyl-4-isothiazoline-3-one | | | | |

The composition 2 described in Table 3b is treated in the same manner as composition 1 given in Table 2b.

**Table 3b:**

| Composition 2 | | | | |
|---|---|---|---|---|
| Steps | Raw Materials | Dilution | Weight [g] | |
| | | | Bottom tank | Pre-emulsion |
| Reactor | H₂O | | 484.68 | |
| | *polymerized seed* | 37% | 24.32 | |
| Initiator | (NH₄)₂S₂O₈ | | 1.20 | |
| | H₂O | | 14.40 | |
| Pre-mix tank 3 | (NH₄)₂S₂O₈ | | 2.40 | |
| | H₂O | | 25.60 | |
| Pre-emulsion 1 Pre-mix tank 1 | H₂O | | | 188.70 |
| | Na₂CO₃ 2H₂O | | | 1.20 |
| | Disponil FES 993IS | 29% | | 41.38 |
| | Isopropanol | | | 4.50 |
| | 2-ethylhexyl acrylate | | | 10.72 |
| | n-dodecyl mercaptan | | | 0.60 |
| | 2-ethylhexyl acrylate | | | 388.27 |
| | ethyl acrylate | | | 74.44 |
| | methyl acrylate | | | 74.44 |
| | styrene | | | 11.91 |
| | methacrylic acid | | | 17.87 |
| | acrylic acid | | | 5.96 |
| | ethyl imidazolidone methacrylate | | | 11.91 |
| Pre-emulsion 2 Pre-mix tank 2 | H₂O | | | 188.70 |
| | Na₂CO₃ 2H₂O | | | 1.20 |
| | Disponil FES 993IS | 29% | | 41.38 |
| | Isopropanol | | | 4.50 |
| | 2-ethylhexyl acrylate | | | 398.99 |
| | ethyl acrylate | | | 74.44 |
| | methyl acrylate | | | 74.44 |
| | styrene | | | 11.91 |
| | methacrylic acid | | | 17.87 |
| | acrylic acid | | | 5.96 |
| | ethyl imidazolidone methacrylate | | | 11.91 |
| Realimentation | Fe(NO₃)₃ | 10% | 0.05 | |
| | Luperox H70 | 10% | 6.00 | |
| | Rongalit C | 5% | 12.00 | |
| Formulation | Biocide K10 | 1% | 4.50 | |

The polymerized seed used in these syntheses is based on the following monomer composition: methyl methacrylate (18.5 wt.-%), styrene (40 wt.-%), n-butyl acrylate (40wt.-%) and acrylic acid (1.5wt.-%):

**Table 4:**

| polymerized seed | | quant. [g] | quant. [%] |
|---|---|---|---|
| reactor | demineralized water | 1323.00 | 47.432 |
| | *Disponil FES 32 IS* | 83.33 | 2.988 |
| initiation | (NH₄)₂S₂O₈ | 2.00 | 0.072 |
| pre-emulsion | demineralized water | 345.61 | 12.391 |
| | Disponil FES 32 IS | 16.70 | 0.599 |
| monomers | methyl methacrylate | 185.00 | 6.633 |
| | Styrene | 400.00 | 14.341 |
| | n-butyl acrylate | 400.00 | 14.341 |
| | acrylic acid | 15.00 | 0.538 |
| formulation | ammonia 25% | 13.00 | 0.466 |
| | Acticide AS | 2.80 | 0.100 |
| | Acticide MV | 2.80 | 0.100 |
| total | | 2789.24 | 100.000 |
| % dry material | | 37.14 | |
| Acticide AS and Acticide MV are biocides from Thor. | | | |
| Acticide AS is a water based formulation of 1,2-benzisothiazoline-3-one and a thiazole derivative | | | |
| Acticide MV is a formulation of 5-chloro-2-methyl-4-isothiazolin-3-one (CIT) and 2-methyl-4-isothiazolin-3-one (MIT) | | | |

For making the polymerised seed, the reactor is fed with water and surfactant, then heated to 80°C. Then, initiator is introduced and polymerisation started by feeding monomer pre-emulsion in 3-4 hours. The mixture is aged for 1 hour then cooled.

The adhesive properties of the aqueous polymer dispersions obtained from composition 1 and composition 2 were tested according to standard test methods:

### Test methods

Peel adhesion (peel strength), resistance to shear from a standard surface (shear strength) and "Quick-Stick" tack (loop tack strength) were determined according to FINAT test methods (FTM) Nos. 1, 8 and 9. These standard test methods FTM 1, FTM 8 and FTM 9 are described in FINAT Technical Handbook 5^{th} edition, 1999, (published by FINAT, P.O. Box 85612 NL-2508 CH The Hague, The Netherlands).

### a) preparing the test strips

The test dispersion was mixed with a wetting agent (Servoxyl VLA 70: sulfoccinate-type surfactant (35wt% in water)). The mixture proportion was 1.5 g Servoxyl in 100 g latex. Then, it was applied to siliconized paper in a thin film, using a bar coater, and was dried at 110°C for 3 minutes. The gap height of the coating bar was chosen so that the weight per unit area of the dried adhesives was 20-22 g/m². A commercially customary plasticized PVC film (80 µm thick) was placed on the dried adhesive and rolled on firmly using a manual roll. The resulting adhesive was stored under atmospheric conditions for at least 24h, then it was cut into 25 mm wide strips. Their minimum length was 175 mm.

### b) Testing the shear strength as a measure of the cohesion (according to FINAT FTM 8)

After the siliconized paper had been peeled off, the film test strip was bonded to the edge of a stainless steel sheet so as to give a bond area of 25 mm X 25 mm. 10 minutes after bonding, a 1000 g weight was fastened to the protruding end of the film strip, and the metal sheet was suspended vertically (ambient conditions: 23°C, 50% relative humidity). The shear strength was taken as the time in minutes, until the adhesive bond failed under the influence of the weight, as the mean from the results of three test specimens.

### c) Testing the peel strength as a measure of the adhesion (according to FINAT FTM 1)

After the siliconized paper had been peeled off, the film test strip was bonded to a glass plate (ambient conditions: 23°C, 50% relative humidity). The test strip was leaved for 20 min, then the strip was peeled off at an angle of 180° and at a rate of 300 mm/min with the aid of a tensile testing apparatus. The peel strength was taken as the force, in N/25 mm, required to do this, again as a mean from the results of three test specimens. The procedure was repeated with a second set of strips with a period of 24h before testing.

### d) Testing the loop tack strength as a measure of the tackiness (according to FINAT FTM 9)

After the siliconized paper had been peeled off, the two ends of the adhesive coated facing material strip were hold together and a loop was formed from the strip, adhesive surface outermost, by bringing the two ends together. The loop ends were clamped for a distance of 10 mm into the top jaw of the tensile tester leaving the loop hanging vertically downwards. The loop was brought into contact with a glass plate at a speed of 300 mm/minute. When full contact over the glass plate had been achieved (25 mm X 25 mm), the direction of the machine was reversed and separation allowed to take place at a speed of 300 mm/minute (ambient conditions: 23°C, 50% relative humidity). The loop tack strength was taken as the force, in N/25 mm, required to do this, again as a mean from the results of three test specimens.

### e) Testing the loss of transparency as a measure of the water-whitening resistance

This method covers the measurement of the loss of transparency of an adhesive coated PVC film after immersion for 7 and 60 minutes in a deionized water bath at 20° to 23°C (Reference: ASTM Method D 1746-70)

The following devices were used for the determination of the water whitening:
HAZE-GUARD PLUS (from Byk-Gardner)
Commercial PVC transparent film
Standard commercial siliconized paper
Meyer bar coater
Drying oven (110°C)
Finat roller of 2 kg

### Preparation of the Formulation

To 200 g of composition 1 and composition 2, respectively were added under slow agitation 3 g of Servoxyl VLA 2170 35% . Under slow agitation NH₄OH 25 % was added to adjust the pH to 6-6.5. The agitation was continued for further 30 minutes and the formulation was allowed to stand overnight.

### Preparation of the Coated material

An adhesive film of 20±2 g/m² on silicone paper with an appropriate Meyer bar coater was drawn. The film was dried for 3 minutes at 110°C in the drying oven without a glass plate. The film was covered with PVC films. Thereafter, it was rolled over the assembly with the Finat roller and the weight/m² of dry adhesive was controlled as follows:

### Samples measurements

After calibration of the HAZE-GUARD PLUS, the loss in total transmittance light through the coated material was measured under the following conditions :

After the siliconized paper had been peeled off, a 25x25 mm sample cut from coated material was immersed in a deionized water bath at 23°C for 7 minutes. Then the total transmittance of light trough the strip was measured using *a haze-guard plus (from BYK Gardner)* (A) and compared to the total transmittance of the strip before immersion (B). The water-whitening was taken, in %, as the transmittance difference (A) - (B), again as a mean from the results of three test specimens. The procedure was repeated with a second set of strips with a period of 60 minutes in immersion before testing.

**Table 5:**

| | composition 1 | composition 2 |
|---|---|---|
| solid content [wt.-%]¹ | 54.75 | 54.55 |
| Brookfield viscosity 50 rpm (cps)¹ | 148 | 140 |
| pH¹ | 4.8 | 4.7 |
| particle size [nm]^{1,2} | 219 | 221 |
| shear strength [min] | > 10000 | > 10000 |
| peel strength 20 min [N/25 mm] | 15.5 | 12.3 |
| peel strength 24 h [N/25 mm] | 15.1 | 14.5 |
| loop tack [N/25 mm] | 13.7 | 13.9 |
| water-whitening 7 min [%] | 0.3 | 1.2 |
| peel strength 20 min [N/25 mm] after ageing 7 days at 60°C³ | 8.8 | 8.2 |
| peel strength 24 h [N/25 mm] after ageing 7 days at 60°C³ | 10.3 | 9.5 |
| loop tack [N/25 mm] after ageing 7 days at 60°C³ | 11.5 | 10.1 |
| water whitening 60 min [%] | 2.2 | 4.3 |

| | | |
|---|---|---|
| ¹ Mean value from results of three measurements | | |
| ² Weight-averaged values determined by dynamic light scattering (Nicomp 370, Particle Sizing Systems). | | |
| ³ The testing strips are aged for 7 days at 60°C in an oven between 2 glass plates. Then the normal procedure to measure peel strength is followed as described earlier. | | |

As illustrated by the above examples, the aqueous polymer dispersions according to the invention exhibit low water whitening characteristics and have an high shear strength together with excellent peel strength and loop tack.

## Claims

1. Aqueous polymer dispersion comprising polymer P composed of
from 5 to 92.5 wt.-% of at least one alkyl acrylate the homopolymers of which have a glass transition temperature of -40°C or below (constituent a);
from 2.5 to 30 wt.-% of at least one alkyl (meth)acrylate the homopolymers of which have a glass transition temperature of from -25°C to 0°C (constituent b);
from 2.5 to 30 wt.-% of at least one alkyl (meth)acrylate the homopolymers of which have a glass transition temperature of between 0°C and 20°C (constituent c);
from 2.5 to 30 wt.-% of at least one ethylenically unsaturated monomer the homopolymers of which have a glass transition temperature of 20°C or above and which do not contain a functional group selected from hydroxyl, acid, acid anhydride, nitro, epoxy and amino groups (constituent d);
from 0 to 10 wt.-% of at least one ethylenically unsaturated monomer having at least one acid group or acid anhydride group (constituent e); and
from 0 to 60 wt.-% of at least one ethylenically unsaturated monomer having either no further functional group or in addition to the ethylenically unsaturated group at least one functional group other than an acid group or an acid anhydride group (constituent f).

2. Aqueous polymer dispersion according to claim 1, **characterized in that** constituent d is a monomer which is selected from the group consisting of: (i) alkyl (meth)acrylates, (ii) vinylaromatic compounds, (iii) vinylhalides, (iv) vinylnitriles and (v) vinylesters of carboxylic acids.

3. Aqueous polymer dispersion according to any of the preceding claims, **characterized in that** constituent a comprises at least one alkyl acrylate selected from the group consisting of n-butyl acrylate, 2-ethylbutyl acrylate, hexyl acrylate, 2-ethylhexyl acrylate, nonyl acrylate and octyl acrylate.

4. Aqueous polymer dispersion according to any of the preceding claims, **characterized in that** constituent b comprises at least one alkyl (meth)acrylate selected from the group consisting of ethyl acrylate, sec-butyl acrylate, dodecyl acrylate, isobutyl acrylate and isopropyl acrylate.

5. Aqueous polymer dispersion according to any of the preceding claims, **characterized in that** constituent c comprises at least one alkyl (meth)acrylate selected from the group consisting of methyl acrylate and n-butyl methacrylate.

6. Aqueous polymer dispersion according to any of the preceding claims,
**characterized in that** constituent d comprises at least one ethylenically unsaturated monomer selected from the group consisting of methyl methacrylate, tert-butyl acrylate, metylstyrene, para-methylstyrene, tert-butylstyrene, styrene, vinyl chloride, methacrylonitrile, vinyl acetate and vinyl formate.

7. Aqueous polymer dispersion according to any of the preceding claims, **characterized in that** constituent e comprises at least one ethylenically unsaturated monomer selected from the group consisting of (meth)acrylic acid, maleic acid, maleic acid anhydride, maleic acid monoester and fumaric acid monoester.

8. Aqueous polymer dispersion according to any of the preceding claims, **characterized in that** constituent f comprises at least one ethylenically unsaturated compound having a group selected from the groups consisting of epoxy groups, hydroxyl groups, ethyl imidazolidone groups, N-methylol groups, carbonyl groups or further ethylenically unsaturated groups which are not conjugated with the other ethylenically unsaturated group.

9. Aqueous polymer dispersion according to any of the preceding claims, **characterized in that** more than 85 wt.-% of the polymer P is composed of 2-ethylhexyl acrylate, ethyl acrylate and methyl acrylate.

10. Aqueous polymer dispersion according to any of the preceding claims, **characterized in that** the polymer P comprises 2-ethylhexyl acrylate, ethyl acrylate, methyl acrylate and styrene, and optionally (meth)acrylic acid, ethyl imidazolidone methacrylate, n-butyl acrylate, n-dodecyl methacrylate and/or methyl methacrylate.

11. Aqueous polymer dispersion according to any of the preceding claims, **characterized in that** the polymer P is composed of 60 to 70 wt.-% of 2-ethylhexyl acrylate, 0 to 1 wt.-% of n-butyl acrylate, 10 to 15 wt.-% of ethyl acrylate, 10 to 15 wt.-% of methyl acrylate, 1 to 5 wt.-% of styrene, 0.5 to 2 wt.-% of acrylic acid, 0.5 to 2 wt.-% of methacrylic acid, 1 to 5 wt.-% of ethyl imidazolidone methacrylate, 0 to 0.5 wt.-% of n-dodecyl methacrylate and/or 0 to 1 wt.-% methyl methacrylate.

12. Aqueous polymer dispersion according to any of the preceding claims, **characterized in that** it comprises at least one aliphatic emulsifier.

13. Aqueous polymer dispersion according to any of the preceding claims, **characterized in that** it comprises at least one aliphatic emulsifier and one aromatic emulsifier.

14. Use of an aqueous polymer dispersion according to any of the preceding claims as adhesive.

15. Polymer P as defined in any of claims 1 to 11.

16. Aqueous polymer dispersion containing polymer P according to claim 15.

17. Use of a polymer according to claim 15 for the preparation of an adhesive.

18. Process for the preparation of polymer P as defined in any of claims 1 to 13, **characterized in that** the constituents a, b, c, d , e and f in form of the monomers are contacted with a suitable polymerization initiator in a reaction medium.

19. Process according to claim 18, **characterized in that** during the polymerization a chain transfer agent is gradually added to the reaction medium.

20. Process according to any of claims 18 or 19, **characterized in that** a polymerized seed is initially added to the reaction medium whereby the composition of the polymerized seed differs in at least one constituent from the composition of the monomers in the reaction medium.

21. Process according to claim 20, **characterized in that** the polymerized seed contains n-butyl acrylate and that the monomers in the reaction medium do not contain n-butyl acrylate.

22. Polymer P according to claim 15 obtainable from the process according to claim 20 or 21.
